Europäisches Patentamt

European Patent Office

Office européen des brevets

(19)

(11) Publication number: **0 109 697**
**B1**

(12) **EUROPEAN PATENT SPECIFICATION**

(45) Date of publication of patent specification: **14.05.86**

(21) Application number: **83201440.1**

(22) Date of filing: **06.10.83**

(51) Int. Cl.⁴: **A 01 N 47/24, A 01 N 45/00, A 01 N 43/90, A 01 N 43/54, A 01 N 37/02**

(54) **Rodent bait.**

(30) Priority: **15.10.82 GB 8229494**

(43) Date of publication of application:
**30.05.84 Bulletin 84/22**

(45) Publication of the grant of the patent:
**14.05.86 Bulletin 86/20**

(84) Designated Contracting States:
**AT BE CH DE FR GB IT LI LU NL SE**

(56) References cited:
**GB-A-1 026 823**
**US-A-2 957 804**

**CHEMICAL ABSTRACTS, vol. 79, no. 7, 20th August 1973, page 95, no. 39314m, Columbus, Ohio, USA, W. BAEUMLER: "Effect of rodenticide baits on the small mammalian forest fauna and a proposal for improved use"**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Hadler, Malcolm Ronald**
**10 St. Peter's Drive**
**Little Budworth Cheshire (GB)**

(74) Representative: **Hunter, Keith Roger Ian et al**
**4 York Road**
**London SE1 7NA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 109 697

**Description**

The present invention is concerned with rodent baits, i.e. edible compositions for killing rodents. Conventionally such compositions are foods comprising an edible component attractive to the rodent and a poison mixed with the edible component so as to provide a homogeneous dispersion of the poison throughout the composition. The effectiveness of such a composition depends on the rodent being attracted to it and feeding on it until a lethal amount of poison is consumed. Consequently, the rodent must not be repelled in the first instance by suspicion arising as a result of the smell and/or appearance of the composition; it must not have its suspicions aroused during feeding so that insufficient composition is consumed to have the required lethal effect; and it must not suffer acute discomfort after consuming a non-lethal dose of the composition as a result, for example, of being disturbed during feeding or of its appetite being satisfied after consumption of only a non-lethal amount of the composition. These are particularly serious problems with rodents since they appear to have the ability to relate subsequent illness or acute discomfort to bait consumed prior thereto as a result of which they develop an aversion known in the art as bait shyness.

Although the word "bait" is often used colloquially to describe the compositions referred to above, it is a conventional term of art and as such it denotes a unit of poisoned food intended to eliminate a number of individual rodents. It is believed it will be clear when the word "bait" is being used in that sense herein.

Much effort has been devoted by those in the prior art to endeavouring to devise environmentally acceptable, yet effective, baits, which will kill rodents with the minimum risk to other forms of life when used in accordance with the supplier's directions.

As has been pointed out by W. E. Howard: "Principles of Vertebrate Animal Control", 1966, it is obviously desirable from the ecological aspect to use as little toxicant as possible. With that in mind Howard suggested expanding research efforts on methodology and indicated a number of areas for such research including, inter alia, testing the use of non-toxic baits mixed with a lesser amount of single-bait — lethal baits; testing dilution baiting (the dilution of toxic baits with a different non-toxic material); determining the most effective size and amount of bait to use, depending upon the strength of poison and the density of the animals to be controlled. In his paper Howard drew attention to areas in which research might be directed, but he did not propose or point the way to a solution to the basic problems which had given rise to the need for further research. Since 1966, the art has reached the stage of having two main kinds of poison. On the one hand there are the acute, fast acting poisons which, when effective, leave bodies visible and, in the case of readily detoxified poisons, reduce the danger of secondary toxicity (when such bodies are consumed by predators), but which have the disadvantage of bait shyness (and the need therefore for pre-baiting with the food component only in order to engender confidence), of constituting a potential environmental problem when used in the hitherto known manner, and being of relatively high cost in terms of active poison per unit kill. On the other hand there are the anticoagulant compounds which, in respect of the just-mentioned problems, provided a major step forward in the art, but these are slow-acting and can therefore be consumed in massive overdose amounts with the real chance of secondary toxicity problems due to predators or scavengers feeding on the bodies, and the practical problem that because death follows some time after consumption bodies are unlikely to be visible, but may be hidden under floors etc. Such anticoagulants are slow to detoxify in the bodies of the rodents which have consumed them.

The research from which the present invention has arisen was carried out with, inter alia, the objective of reducing the amount of toxicant put into the environment, but the approach taken differed distinctly from that which would be required in any of the research areas suggested by Howard.

The present invention breaks new ground by making use of a feeding habit which has been observed in relation to the rodents it is necessary to control, namely that they will not nibble at particles if they are small enough. Such small particles are taken into the stomach as such, and the feeding specie appears to lose the ability to discriminate between food and a particle of a lethal poison (i.e. a poison lethal in the amount of one such particle). This is surprising because, when the bait is a homogeneously poisoned food as hitherto employed, a rodent is sufficiently attuned to the detection of an undesirable component in its food that it is able to detect and reject food about the fitness (to eat) of which it is in any doubt. That is a fundamental problem encountered when formulating baits comprising mixtures of food and poison, and it has been necessary to ensure that the poison content of the individual food particles of the baits hitherto used is low enough to be undetected by the feeding animal. That places a restriction on the maximum concentration of poison that can be homogeneously distributed in a food, so reliance has to be put on the rodent consuming an appreciable amount of poisoned food in order to accumulate in its body a lethal concentration of poison. The problem is accentuated by the likelihood of a rodent only nibbling a bait on the first encounter, but absorbing sufficient toxicant to cause unpleasant symptoms which discourage further feeding on that particular type of bait, on subsequent occasions. To overcome this problem, pre-baiting with unpoisoned food particles is often necessary to accustom the rodent to the food component of the bait, although that subterfuge does not eliminate the possibility of the rodent failing to eat sufficient lethal composition at a given feeding session simply because it is not hungry enough when it encounters the bait. It will be appreciated that the chance of bait shyness and/or wastage of poison arising with the conventional bait is high because each bait particle will contain some poison, and in general baits in which the poison is

2

homogeneously distributed throughout the bait need to provide more toxicant than is required to kill a given number of rodents.

GB—A—1 026 823 discloses the use of a composition for administering poisons to animals, e.g. rabbits, comprising a mixture of (i) a quantity of a particulate carrier material edible to the animal, each particle of which has been impregnated with a lethal dose of the poison and coated with an inert substance acceptable to the animal, and (ii) a quantity of particulate material edible to the animal and free of the poison.

US—A—2 957 804 discloses pesticides, e.g. rodenticides, in the form of laminated, self-sustaining bodies including an internal nucleus containing a predetermined lethal quantity of an economic poison and provided with an enteric coating completely enveloping said nucleus to prevent release of the poison to the pest upon ingestion of the body until after the latter has passed through the pest's stomach to its intestine, said body being of a size to allow the pest to gulp the body without chewing or fracturing the coating.

The present invention provides a rodent bait comprising food and a poison, said poison being wholly in the form of, or contained in, one or more discrete poison-providing particles of such activity with respect to the rodent species for which the bait is intended that each poison-providing particle provides a lethal dose with respect to an adult rodent or that species, each poison-providing particle being uncoated and substantially homogeneous and being of a particle size which is such that a rodent of the species for which the bait is intended will take the particle into its mouth without prior nibbling. Thus each such particle is ingested orally as an individual particle; the required particle size can be determined by routine experiment. The term "lethal dose" means a dose which normally is capable of killing an adult rodent of the species concerned when taken orally thereby; to those in the art this means a dose which presents an insignificant chance of survival to the largest rodents of the species concerned which is likely to be encountered.

It will be appreciated, therefore, that the present invention is predicated on the new concept of concentrating the poison component of the bait in particles each of which is lethal per se, and ensuring that the poison particles are taken as a whole into the mouth of the rodent, i.e. without prior nibbling of the poison particles. As a result the rodent feeds on the bait and consumes the food component thereof, which it can nibble or not depending on its particle size, until sooner or later it comes to a poison particle. When it does so, it consumes that particle whole, and once having it into its mouth and swallowed it, death follows inevitably in view of the lethal dose nature of the particle. In short the rodent either consumes innocuous edible material or a lethal dose of poison. Preferably there is no significant delay between ingestion of the particle and death, as this reduces continued feeding which may lead to ingestion of a further poison-providing particle.

This fundamentally new approach to the formulation of rodent baits has the advantage that the bait as a whole need only comprise relatively few lethal particles in order to be effective against a number of rodents because whilst sooner or later in the feeding session each rodent can be expected to take into its mouth a poison particle it is very unlikely to consume more than one such particle because of the lethal nature of the first, if the poison is an acute poison. Also, the inability to detect the presence of lethal particles results in the rodent feeding normally without bait shyness so that even if it does not happen to consume a poison particle at the first feed, it will not be deterred from feeding again on the same kind of bait.

The present invention makes it possible for the first time to use safely rodent poisons which are lethal and fast acting in very small quantities. Hitherto, the poison content of acute baits, in which the poison is homogeneously distributed throughout the food component in accordance with conventional practice, has normally been in the concentration range 0.2 to 2.0% (2000 to 20,000 ppm). This is a high concentration from the environmental hazard point of view. In contrast, the maximum concentration of poison envisaged in carrying out the present invention is of the order of 200 ppm, and at that concentration there is at least a tenfold safety advantage over the prior art. A maximum concentration of 200 ppm, which provides for baits containing, for example 200 particles at 1 mg of poison per poison particle or 2000 particles at 0.1 mg of poison per poison particle, per kilogram of bait, gives adequate scope for formulating all the kinds of bait likely to be required in practice so although, of course, it is not a critical upper limit, there is normally no reason to exceed that maximum concentration, and in practice lesser amounts can usually be employed.

Whilst it is possible for the bait to include only one such poison particle, normally it will contain a number of such particles. If as is preferred, the poisons used are ones which rapidly become detoxified in the rodent body, although a lethal particle taken orally by the rodent will kill it, a larger mammal such as a dog (for which the lethal dose would be much larger) happening to feed on the bait would feel sub-lethal symptoms rapidly and stop eating or, because it would take so long for a dog to find and eat a significant number of baits, the poison would detoxify in the dog's body as it was doing so and would never reach a lethal level. Baits in accordance with the invention can be formulated so as to be specific to particular rodents. For example, an adult rat weighing 250 grams will eat about 20 grams of food per day. Each bait for rats could comprise say 200 grams and could contain sufficient poison particles to kill say 10 rats. On a one per rat basis that would require 10 such particles because if the particles are distributed as homogeneously as possible in the food component of the bait, on average a rat will come to one and consume it in the course of eating 20 grams. Baits for mice would contain particles of smaller size. An adult mouse will eat about 2—3 grams of food per day, so that the mouse bait would contain one poison particle per 2—3 grams of food. The overall amount of poison in the bait can be the same as in the rat bait, for example, 50 ppm, but it would be dispersed therein in the form of a larger number of smaller size discrete particles. The quantity of poison present in each poison-providing particle will of course vary depending on the target species and on the poison. The toxicity of a poison is often expressed as an LD95 — the dosage required to kill 95% of a population. Desirably, each particle should contain a quantity of poison of at least the LD95 dosage.

If desired a major proportion or all of the food component of the bait can be in the form of particles below the critical size in order to induce "scoop feeding" in preference to nibbling, but this is optional and it is only essential for the poison to be in the form of such particles. It is, of course, essential for each such poison particle to constitute a lethal dose. The full benefit of the new concept inherent in the present invention arises when the poison employed is fast-acting and rapidly detoxified. A fast acting poison helps to ensure that only one lethal poison particle is consumed by each rodent, and rapid detoxification reduces the amount of poison present in the bodies. In order to achieve the requirement that each poison particle should constitute a lethal dose it is, of course, necessary to employ poisons which are highly toxic. With the conventional baits hitherto used, such poisons have not been acceptable owing to the much larger amount of poison needed for a conventional bait and the resulting environmental toxic hazard which such a bait, or the residue remaining after partial consumption, would present. A preferred poison is that known as aldicarb, but others are available, including, in some countries, scilliroside. Examples of suitable acute poisons are:—

CARBAMATES — e.g. aldicarb: 2 methyl-2-(methylthio) propionaldehyde O-(methylcarbamoyl) oxime

ORGANO PHOSPHATES — e.g. 3-hydroxycrotonic acid methyl ester of dimethyl phosphate and Tetraethyl pyrophosphate .

MISCELLANEOUS ACUTE TOXICANTS — e.g. Crimidine: 2 chloro-4-(dimethylamino)-6-methylpyrimidine and Sodium fluoroacetate and Tetramine: 2,6-Dithia-1,3,5,7-tetrazatricyclo[3.3.1.1.$^{3,7}$]-decane-2,2,6,6-tetroxide.

It will be appreciated that although potent poisons of the kind exemplified, for example aldicarb, are preferred, other poisons can be utilised in carrying out the present invention provided that such poisons are lethal at the dose level of a particle of below critical size.

The poison particles are formed as hard, dense particles of such a nature (shape, smell) that a rodent does not have any reason to be suspicious of them to the point of rejection, but will consume them along with the food particles or nibbled food it obtains from the bait.

Preferably, the bait is formed into blocks or pellets. The food base and the selected number of poison particles are made into a homogeneous mixture, which is then lightly compressed into pellets or blocks. Each such pellet or block will comprise a matrix of edible material in which the poison is dispersed discontinuously in discrete, highly concentrated particles of a size below the aforesaid critical size, the number of such particles ranging, for example, from 1 to 10 depending on the size of the pellet or block. When such pellets or blocks are consumed by rodents, the rodent will, of course, see them essentially as pellets or blocks of food, and it will nibble and break pieces off and eat them and in due course the poison particle(s) will also be consumed. As soon as a rodent has consumed one of the poison particles contained within the pellet or block it will have taken a lethal dose of poison, so that little or no further feeding will occur. Any remaining bait, normally containing at least one further poison particle, will be available for consumption by a further rodent.

The food base of the bait can be any conventional edible bait component such as oatmeal, fishmeal and cornmeal, and, if desired, binders such as gelatin can be present. The poison particles can be crystals of the selected poison where appropriate, or powdered poison bound with a binder such as gelatin, a wax or a resin. The poison particles may comprise a food material, for example sucrose, attractive to rodents. The poison particles may also be coloured to facilitate identification. Preferably the particles consist either of poison alone or of poison together with a binder. It is important that the poison-providing particles are substantially homogenous. Particles provided with coatings are ineffective, as demonstrated in the Examples following.

The poison-providing particles are preferably prepared by combining the ingredients for the particles with liquid solvent to form a paste; extruding the paste through an orifice; cutting the extrudate into particles; and drying the particles. A bait according to the invention is then prepared by mixing the particles with food, and preferably compressing the resulting mass into pellets or blocks.

The following Examples illustrate the invention.

Toxic particles were made up according to the following formulations A, B and C.

# 0 109 697

### FORMULATION A

| Aldicarb | 1500 mg |
|---|---|
| Gelatin | 350 mg |
| Sucrose | 100 mg |
| Chlorazol Sky Blue | 50 mg |

The last three components were dissolved in 1.3 ml distilled water and the solution was mixed with the aldicarb to give a stiff paste. The paste was extruded through a 1 mm orifice. The extrudate was air dried at 30°C for 24 hours, then cut by hand to give three particles sizes as stated below.

At least fifty particles of each size were weighed and the aldicarb content calculated on the basis of dry weight:

| Particle Size | Aldicarb content of each particle |
|---|---|
| 1 mm × 2 mm | 1.25 mg |
| 1 mm × 1 mm | 0.5 mg |
| app. 0.5 mm × 0.5 mm | 0.2 mg |

Because of the hand cutting process, considerable variation may be expected. In the case of the smallest this was *estimated* to be ±30%, with the largest ±10%.

### FORMULATION B

| Aldicarb | 200 mg |
|---|---|
| Lactose | 300 mg |

0.2 ml 8% w/v gelatin in water

The aldicarb was dissolved in acetone then slurried onto the lactose. The mixture was air dried. When dry the gelatin solution was added and the resulting mixture was ground to a paste, which was extruded through a 1 mm orifice.

The extrusions were air dried, then cut by hand to give two particle sizes, namely 1 mm × 1 mm and 1 mm × 4 mm cylinders.

At least fifty particles of each size were weighed and the aldicarb content calculated on the basis of dry weight:

| Particle Size | Aldicarb of each particle |
|---|---|
| 1.0 × 1.0 mm | 0.2 mg |
| 1.0 × 4.0 mm | 1.1 mg |

### FORMULATION C

| Active Toxicant | 80.0% w/w |
|---|---|
| Gelatin B.P. | 14.7% |
| Sucrose | 4.83% |
| Sodium Alginate | 0.24% |
| Warning Dye | 0.24% |

The gelatin was dissolved in an amount of water sufficient to give an extrudable mix. The other ingredients were milled to very fine powders, mixed together then mixed with the gelatin/water mix and thoroughly homogenised.

5

The resultant dough-like mix was extruded under high pressure through orifices of various diameter against a cutting wheel to give cylindrical particles of the desired dimensions.

The particles were air dried to constant weight.

The following are typical weights of active ingredient delivered by such particles of various lengths and diameters.

| Diameter mm | Length mm | Weight mg |
|---|---|---|
| 1.5 | 3.0 | 5.4 |
| 1.5 | 1.5 | 2.6 |
| 1.0 | 1.0 | 0.85 |
| 0.75 | 0.75 | 0.36 |
| 0.50 | 0.50 | 0.11 |
| 0.45 | 0.45 | 0.09 |
| 0.40 | 0.40 | 0.06 |
| 0.20 | 0.5 | 0.02 |

Except where otherwise stated, baits according to the invention were produced by thoroughly hand mixing the particles with medium oatmeal, and the baits were fed to caged rats and mice as the sole feed. Water was made freely available to them. The baits remaining in each cage were weighed daily, and fresh baits provided each day.

Example 1 (comparative)

Totally homoneneous baits were produced by slurrying an acetone solution of aldicarb on medium oatmeal to give a concentrate, then diluting the concentrate with medium oatmeal by hand mixing, to give an aldicarb concentration of 100 ppm. The toxicity of the resulting bait was determined by tests on 5 female Wistar rats and 10 male LACA mice. The results are given in Table 1.

TABLE 1

| | Bait Consumption (g) | | Kill | |
|---|---|---|---|---|
| Day | Rat | Mouse | Rat | Mouse |
| 1 | 10 | 20 | 0 out of 5 | 0 out of 10 |
| 2 | 10 | 50 | 0 out of 5 | 0 out of 10 |
| 3 | 15 | 40 | 0 out of 5 | 0 out of 10 |
| 4 | — | 40 | — | 0 out of 10 |

Example 2

The toxicity of aldicarb particles made to formulation A was determined by tests on 5 Wistar females exposed to medium oatmeal containing *one* 1.25 mg pellet per 20 grams of oatmeal. The results are given in Table 2:

TABLE 2

| Day | Bait Consumption (g) | Kill |
|---|---|---|
| 1 | 55 | 2 out of 5 |
| 2 | 35 | 2 out of remaining 3 |
| 3 | 0 | Remaining rat killed |

### Example 3

5 Heterozygous anti-coagulant resistant rats were allowed to feed on bait consisting of medium oatmeal containing one 1.25 mg particle made to formulation A per 20 grams of oatmeal. The bait was weighed daily, but in this example it was not changed daily. The results are given in Table 3:

TABLE 3

| Day | Bait Consumption (g) | Kill |
|-----|----------------------|------|
| 1 | 50 | 3 out of 5 |
| 2 | 15 | 1 out of remaining 2 |
| 3 | 10 | Remaining rat killed |

### Example 4 (comparative)

10 Male LACA mice were fed with bait consisting of medium oatmeal containing one 0.5 mg particle made according to formulation A per 10 grams of oatmeal. The results are given in Table 4:

TABLE 4

| Day | Bait Consumption (g) | Kill |
|-----|----------------------|------|
| 1 | 75 | 1 out of 10 |
| 2 | 60 | 0 out of remaining 9 |
| 3 | 60 | 2 out of remaining 9 |
| 4 | 40 | 1 out of remaining 7 |

### Example 5

10 Male LACA mice were permitted to feed on bait consisting of medium oatmeal containing one 0.2 mg particle of formulation A per 2 grams of oatmeal. The results are given in Table 5:

TABLE 5

| Day | Bait Consumption (g) | Kill |
|-----|----------------------|------|
| 1 | 60 | 4 out of 10 |
| 2 | 15 | 3 out of remaining 6 |
| 3 | 10 | 3 out of remaining 3 |

### Example 6

5 Male LACA mice were starved for 24 hours and then permitted to feed on 50 g of medium oats containing dispersed therein 10 particles of formulation B each containing 0.2 mg of aldicarb. The results are given in Table 6.

TABLE 6

| Day | Bait Consumption (g) | Kill |
|---|---|---|
| 1 | 30 | 2 out of 5 |
| 2 | 15 | 2 out of remaining 3 |

### Example 7

3 Male heterozygous resistant rats were permitted to feed on 50 g medium oatmeal containing 10 particles of formulation B each containing 1.1 mg of aldicarb. The results are given in Table 7.

TABLE 7

| Day | Bait Consumption (g) | Kill |
|---|---|---|
| 1 | 10 | All killed |
| 2 | — | — |

### DISCUSSION

It will be apparent from comparative Example 1 that when aldicarb was homogeneously dispersed throughout the edible component of the bait as in a conventional bait formulation, no kills were recorded in either rats or mice after 3 and 4 days exposure respectively. From Table 1 it will be noted that the bait consumption was low; compare Table 1 with Tables 2 to 7. This is probably due to a bait shyness effect and is characteristic of conventionally formulated acute poisons. The rats took only about 12% of their normal daily requirement, the mice about 20% on the first day, but on subsequent days the take increased. It is thought that this may be due to an induction effect in which detoxifying enzymes were induced by the first, sub-lethal, dose.

From Tables 2, 3 and 7 it will be apparent that when dispersed as discrete particles of a size such that rats will not nibble them, but will take them whole, the aldicarb is wholly effective against rats. Moreover, the overall concentrations of aldicarb so used are less than those which killed no rats when homogeneously dispersed throughout the edible component of the bait as in conventional baits.

Examples 4 and 5 provide a demonstration of how those in the art can readily determine the upper limit of poison particle size in relation to the rodent specie concerned. The results in Table 4 show that 0.5 mg aldicarb particles were too large for the average mouse because only 4 out of 10 mice were killed, as compared with the 100% kill achieved in Example 5 in which the smaller 0.2 mg aldicarb particles were used. The mice actually consumed 235 grams of bait in Example 4, which shows clearly their ability to discriminate and normally to reject the too large (0.5 mg) particles. The fact that a 40% kill was achieved in Example 4 reflects the fact that some variation in particle size undoubtedly occurred (as indicated in the preamble to the examples), and, of course, that one can expect some experimental latitude in routine experiments of this nature, anyway. However, it will be clear from Examples 4 and 5 that routine experiment will readily indicate the nominal poison particle size which will ensure that an average rodent of the species the bait is intended to kill will consume the poison particles whole, and, therefore, be killed.

### Example 8

This Example demonstrates that baits according to the invention can be effective against the target pest while remaining safe to animals substantially larger than the target pest.

Particles of a size suitable for consumption whole (without nibbling) by mice, i.e. about 0.5 mm diameter spheres, containing 0.1 mg of aldicarb per particle were produced by a precipitation process.

Suitably larger particles appropriate for rats, i.e. about 1 mm × 1 mm cylinders, containing 1.0 mg of aldicarb per particle were produced by extrusion.

The mouse bait particles were distributed in medium oatmeal at the concentration of one per two grams of oatmeal (50 ppm), and the rat bait particles were distributed in medium oatmeal at the concentration of one per twenty grams of oatmeal (50 ppm).

Ten male 12—18 gram LAC mice and five female 300—350 gram Wistar rats were permitted to feed on the mouse bait; and five female 300—350 gram Wistar rats were allowed to feed on the rat bait. The baits were topped up when necessary to keep a supply of food material available, and water was supplied freely. The results are given in Table 8:

TABLE 8

| Day | Mouse bait particles | | | | Rat bait particles | |
|---|---|---|---|---|---|---|
| | Rat | | Mouse | | Rat | |
| | Consumption (g) | Kill | Consumption (g) | Kill | Consumption (g) | Kill |
| 1 | 95 | 0/5 | 25 | 4 out of 10 | 70 | 2 out of 5 |
| 2 | 80 | 0/5 | 10 | 5 out of remaining 6 | 20 | 2 out of remaining 3 |
| 3 | 70 | 0/5 | 0 | Remaining mouse died | 0 | Remaining rat died |
| 4 | 65 | 0/5 | | | | |
| 5 to 7 | 175 | 0/5 | | | | |

All the baits contained 50 ppm of aldicarb. Example 1 shows that 100 ppm of aldicarb homogeneously distributed throughout the edible component as in conventional practice does not kill either rats or mice. All rats feeding on the 1 mg particles and all mice feeding on the 0.1 mg particles died by the end of the third day, but the rats feeding on the mouse bait were not killed even after seven days of feeding thereon. This result indicates that animals significantly larger than mice would not be killed by accidental consumption of an aldicarb bait in accordance with the invention which is intended for use against mice. By extrapolation one can assume that the corresponding rat bait would be safe to any animal significantly larger than a rat.

Example 9

Three baits were produced containing the toxicant aldicarb, each at 100 ppm (0.01%) concentration. Aldicarb was presented in the bait either homogeneously dispersed in the manner of a conventional rodenticide, as discrete 0.4 × 0.4 mm particles, (formulation C) or as discrete 1.0 × 1.0 mm particles. The diluent was medium grade oatmeal in all cases. Tests were carried out on mice with a body weight approximately 20 g, rats with a body weight approximately 250 g, and rabbits with a body weight approximately 2,500 g.

Baits were offered with no choice of alternative food for five days.

The results ater 5 days are given in Table 9.

TABLE 9

| Aldicarb Presentation 100 ppm as: | Mouse | | Rat | | Rabbit | |
|---|---|---|---|---|---|---|
| | Take g/day | Kill % | Take g/day | Kill % | Take g/day | Kill % |
| HOMOGENEOUS | 1.6 | 0 | 1.9 | 0 | 14.2 | 0 |
| 0.4 × 0.4 mm | 1.0 | 100 | 3.4 | 0 | — | — |
| 1.0 × 1.0 mm | 1.8 | 30 | 9.9 | 100 | 11.4 | 0 |

These results show that when aldicarb was dispersed homogeneously through the diet base in the manner of a conventional rodenticide, none of the test animals died.

**0 109 697**

All mice died when offered 100 ppm aldicarb dispersed on 0.4 × 0.4 mm particles, only 30% of exposed mice were killed by 100 ppm aldicarb offered as 1 × 1 mm particles.

No rabbits died when exposed to any of the three formulations.

When homogeneously dispersed, the aldicarb is being slowly and continuously absorbed at such a rate that it is detoxified before death can occur. A single 0.4 mm × 0.4 mm particle delivers a dose of 3 mg/kg to a 20 g mouse, but only 0.24 mg/kg to a 250 g rat and 0.025 mg/kg to a 2.5 kg rabbit. When absorbed in such low dosages the bait is not lethal because detoxification proceeds more rapidly than the lethal effect. A 1 mm × 1 mm particle delivers 3.4 mg/kg to a 250 g rat but only 0.34 mg/kg to a 2.5 kg rabbit, thus all rats are killed but not rabbits.

A 1 × 1 mm particle is capable of delivering a dose of 42.5 mg/kg to a 20 g mouse yet only 30% of the mice died. Particles of this size are discriminated against by mice and rejected.

The results prove that by modifying the form in which it is presented, a 100 ppm aldicarb bait can be produced which is selectively toxic to the target pest purely on the basis of that target body weight.

Example 10

This example demonstrates the routine experiments used to determine the optimum particle size for use against specific target pests.

Rats were offered medium oatmeal diet containing aldicarb particles (formulation C) at the rate of one per 10 g diet base and mice were offered the particles at the rate of one per 4 g diet base.

The results after 5 days are given in Table 10.

TABLE 10

| Body Weight (g) | Particle Diameter/ Length (mm) | Take per death (g) | Kill (%) |
|---|---|---|---|
| 60—80 Weaner | 1.5 × 3.0 | 22.7 | 80 |
| RATS | 1.0 × 1.0 | 6.1 | 100 |
| | 0.75 × 0.75 | 7.2 | 100 |
| 300—400 Adult | 1.5 × 3.0 | 3.5 | 100 |
| RATS | 1.0 × 1.0 | 5.7 | 100 |
| | 0.75 × 0.75 | 35.6 | 50 |
| 12—10 g. Weaner | 0.2 × 0.5 | 10.7 | 60 |
| . MICE | 0.4 × 0.4 | 5.9 | 100 |
| | 0.5 × 0.5 | 10.8 | 70 |
| | 0.75 × 0.75 | 12.3 | 57 |
| 20—25 g Adult | 0.2 × 0.5 | 132.0 | 0 |
| MICE | 0.4 × 0.4 | 3.5 | 100 |
| | 0.5 × 0.5 | 6.2 | 100 |

Weaner rats were totally killed by 0.75 × 0.75 mm and 1.0 × 1.0 mm particles with no evidence of discrimination but obviously the larger 1.5 × 3.0 mm particles were discriminated against since, despite the larger dose available, the quantity consumed per kill was in excess of that expected and incomplete kill was obtained.

Large adult rats were not killed by the smaller 0.75 × 0.75 mm particle but did not discriminate against the larger 1.0 × 1.0 mm and 1.5 × 3.0 mm particles.

Thus the optimum particle size required to deliver a lethal dose of aldicarb to both the smallest and largest rat in a population is about 1.0 × 1.0 mm.

Weaner and adult mice were completely killed by 0.4 × 0.4 mm particles and the amount of bait eaten per kill corresponds approximately with the dilution rate of one particle per 4 g. Incomplete kills occurred in

10

both groups with 0.2 × 0.5 mm particles indicating insufficient toxicant to deliver a lethal dose. 0.5 × 0.5 mm particles killed all adults but failed to kill all weaners and the amount of bait eaten per kill indicates sorting. The sorting is even more pronounced when weaner mice are offered 0.75 × 0.75 mm particles. Thus the optimum size of particle required for mice is about 0.4 × 0.4 mm.

Example 11

This Example illustrates the use of various acute poisons in the baits of the present invention.

Particles containing various acute poisons were made according to Formulation C, and feeding trials were carried out with rats and with mice.

All the compounds tested are known acute rodenticides and are generally recognised as being dangerous to non-target animals at the concentration normally employed and to cause bait shyness in target animals if used without pre-baiting.

The recommended normal concentrations in conventional baits are:

| Tetramine | 1,000 ppm |
| Sodium fluoroacetate | 1,000—5,000 ppm |
| Scilliroside | 500 ppm |
| Crimidine | 1,000 ppm |

The results obtained are given in Table 11, and show that all four conventional rodenticides can be used in the baits of the present invention at much lower concentrations than normally recommended, and without bait shyness occurring.

TABLE 11

| TOXICANT | PARTICLE DIAMETER × LENGTH mm | BAIT CONC. ppm | KILL % | DAYS TO KILL |
|---|---|---|---|---|
| TETRAMINE—MOUSE | 0.4 × 0.4 | 15 | 90 | 5 |
| RAT | 0.75 × 0.75 | 36 | 100 | 2 |
| SODIUM FLUOROACETATE—RAT | 1.5 × 1.5 | 250 | 100 | 2 |
| SCILLIROSIDE—RAT | 1.5 × 1.5 | 50 | 100 | 2 |
| CRIMIDINE—MOUSE | 0.45 × 0.45 | 22.5 | 100 | 5 |
| RAT | 1.5 × 1.5 | 250 | 100 | 3 |

**0 109 697**

Example 12

This Example demonstrates various food bases for the baits according to the invention.

Aldicarb 1 mm × 1 mm particles (formulation C) were dispersed at the rate of one per 10 g bait in the following baits.

%

1. Aldicarb particles      0.0085

Warning Dye      0.025

Sodium Chloride      0.50

Monosodium Glutamate      0.57

Medium Oats      98.89

Tested as loose granular powder.

2. Aldicarb particles      0.0085

Warning Dye      0.125

Sodium Chloride      0.50

Monosodium Glutamate      0.45

Glycerol      2.5

Powdered Wax      30.0

Wheat flour      66.42

Compressed into water resistant blocks in a mould, each block being 20 g weight.

3. Aldicarb particles      0.0085

Linseed Oil      2.7

Chicken Meal      97.29

Extruded into pellets of 4 mm diameter and 7—15 mm length.

Adult rats were offered the three formulations with no alternative food. The results, given in Table 12, show that all three baits are effective.

TABLE 12

| | Mean bait take g/day/rat | | | | |
|---|---|---|---|---|---|
| Formulation | Day 1 | Day 2 | Day 3 | Day 4 | Day 5 |
| 1 | 9.0 | 2.1 | | | |
| Cumulative % kill | 80 | 100 | | | |
| 2 | 10.5 | 11.1 | | | |
| Cumulative % kill | 70 | 100 | | | |
| 3 | 8.6 | 11.5 | 17.1 | 8.3 | 17.6 |
| Cumulative % kill | 60 | 80 | 80 | 80 | 100 |

12

## Example 13 (comparative)

This Example illustrates the effect of providing poison-providing particles with a coating.

Particles containing Aldicarb, prepared according to Formulation C and with a size 1 × 1 mm, were coated with shellac or with PVA by conventional means. Further particles were provided with a polymeric coating by exposing the particles to formaldehyde vapour: this causes the gelatin binder to polymerize on the surface.

Feeding tests were carried out on male Wistar rats, and the results are given in Table 13.

### TABLE 13

| | | Coating System: | | | | | | | | | | |
|---|---|---|---|---|---|---|---|---|---|---|---|---|
| | Uncoated | | | Shellac | | | Formaldehyde Gelatin | | | P.V.A. | | |
| Rat | 1 | 2 | 3 | 1 | 2 | ·3 | 1 | 2 | 3 | 1 | 2 | 3 |
| Hours: 1 | M | M | C | O | O | O | O | C | O | C | C | O |
| 2 | D | D | C | M | M | M | O | C | O | M | M | C |
| 3 | | | D | ·O | C | M | C | C | C | D | M | M |
| 4 | | | | M | C | C | C | C | O | | M | M |
| 5 | | | | M | M | C | M | M | M | | C | C |
| 6 | | | | C | C | C | C | C | C | | D | M |
| 7 | | | | X | X | X | X | X | X | | | X |

O   No visible effect
M   Mild convulsion — limb twitching, laboured respiration
C   Intensive convulsions, loss of limb coordination, eyes bulging
D   Dead
X   Animal killed for humane reasons. (UK legislation provides that experimenters may not permit animals to suffer obvious distress for prolonged periods).

The results show that substantially homogeneous poison-providing particles are very much more effective in the baits according to the invention than are coated particles. It is an advantage of the invention that animals having consumed a toxic particle shall be rapidly affected, thus reducing the possibility of continual feeding leading to the absorption of another lethal dose. The use of coatings is antagonistic to this aim. Furthermore, it is well known that the average residing time of food in a rodent gut (i.e. the time from eating to defecation) is between 6 and 12 hours. A particle releasing toxicant at the slow rate indicated in the results above could be eliminated before the lethal dose is absorbed.

**Claims**

1. A rodent bait comprising food and a poison, said poison being wholly in the form of, or contained in, one or more discrete poison-providing particles of such activity with respect to the rodent species for which the bait is intended that each poison-providing particle provides a lethal dose with respect to an adult rodent of that species, each poison-providing particle being uncoated and substantially homogeneous and being of a particle size which is such that a rodent of the species for which the bait is intended will take the particle into its mouth without prior nibbling.

2. A bait as claimed in claim 1, wherein the poison is aldicarb.

3. A bait as claimed in claim 1, wherein the poison is tetramine, sodium fluoroacetate, scilliroside or crimidine.

4. A bait as claimed in any one of the preceding claims, wherein the poison-providing particles contain a poison and a binder.

5. A bait as claimed in claim 4, wherein the poison-providing particles also contain a food material attractive to the rodent.

6. A bait as claimed in any one of the preceding claims, in the form of a pellet or block.

7. A bait as claimed in any one of the preceding claims, wherein the number of poison-providing particles in relation to the amount of food material is such as to provide one particle for each average

**0 109 697**

weight of food consumed per day by an average adult rodent of the rodent species against which the bait is intended to be used.

8. A rodent bait as claimed in any one of the preceding claims, wherein the concentration of poison in the bait as a whole does not exceed 200 ppm.

9. A process for making a bait as claimed in any one of claims 1 to 8, which comprises combining the ingredients for the poison-providing particles with liquid solvent to form a paste; extruding the paste through an orifice; cutting the extrudate into particles; drying the particles; and mixing the particles with food.

10. A process as claimed in claim 9, which comprises the subsequent step of compressing the bait into pellets or blocks.

### Patentansprüche

1. Nagetierköder mit einem Gehalt an Nahrungsmittel und einem Gift, welches Gift zur Gänze in Form eines oder mehrerer diskreter giftliefernder Teilchen von solcher Aktivität gegenüber der Nagetierspezies, für welche der Köder vorgesehen ist, vorliegt oder darin enthalten ist, daß jedes giftliefernde Teilchen eine letale Dosis, bezogen auf ein ausgewachsenes Nagetier dieser Spezies, freisetzt, wobei jedes giftliefernde Teilchen überzugsfrei und im wesentlichen homogen ist und eine solche Teilchengröße aufweist, daß ein Nagetier der Spezies, für welche der Köder vorgesehen ist, das Teilchen ohne vorhergehendes Anknabbern in sein Maul aufnehmen wird.

2. Köder nach Anspruch 1, worin das Gift ALDICARB ist.

3. Köder nach Anspruch 1, worin das Gift Tetramin, Natriumfluoracetat, Scillirosid oder Crimidin ist.

4. Köder nach einem der vorstehenden Ansprüche, worin die giftliefernden Teilchen ein Gift und ein Bindemittel enthalten.

5. Köder nach Anspruch 4, worin die giftliefernden Teilchen auch ein für das Nagetier anziehendes Nahrungsmaterial enthalten.

6. Köder nach einem der vorstehenden Ansprüche in Form eines Pellets oder Blocks.

7. Köder nach einem der vorstehenden Ansprüche, worin die Zahl der giftliefernden Teilchen in Beziehung zu der Menge an Nahrungsmaterial derart ist, daß ein Teilchen für jedes durchschnittliche Nahrungsgewicht vorliegt, das täglich von einem durchschnittlichen, ausgewachsenen Nagetier der Nagetier-Spezies verzehrt wird, gegen welche der Köder verwendet werden soll.

8. Nagetierköder nach einem der vorstehenden Ansprüche, worin die Konzentration des Giftes im Köder als Ganzes 200 Teile pro Million nicht überschreitet.

9. Verfahren zur Herstellung eines Köders, wie in einem der Ansprüche 1 bis 8 beansprucht, welches ein Vereinigen der Bestandteile für die giftliefernden Teilchen mit flüssigem Lösungsmittel zur Ausbildung einer Paste; ein Extrudieren der Paste durch eine Öffnung; ein Schneiden des Extrudats zu Teilchen; ein Trocknen der Teilchen; und ein Vermischen der Teilchen mit Nahrungsmittel umfaßt.

10. Verfahren nach Anspruch 9, welches die anschließende Stufe des Pressens des Köders zu Pellets oder Blöcken umfaßt.

### Revendications

1. Un appât pour rongeurs comprenant de la nourriture et un poison, ce poison étant complètement dans la forme de, ou contenu dans, une ou plusieurs particules discrètes fournissant du poison d'une activité telle en ce qui concerne l'espèce de rongeur pour laquelle l'appât est prévu que chaque particule fournissant du poison fournisse une dose mortelle pour un rongeur adulte de cette espèce, chaque particule fournissant du poison étant non-revêtue et sensiblement homogène et étant d'une grosseur de particule telle qu'un rongeur de l'espèce pour laquelle l'appât est prévu prenne la particule dans sa bouche sans grignotement préalable.

2. Un appât selon la revendication 1, dans lequel le poison est de l'aldicarb.

3. Un appât selon la revendication 1, dans lequel le poison est de la tétramine, du fluoro-acétate de sodium, du scilliroside ou de la crimidine.

4. Un appât selon l'une quelconque des revendications précédentes, dans lequel les particules fournissant du poison contiennent un poison et un liant.

5. Un appât selon la revendication 4, dans lequel les particules fournissant du poison contiennent aussi une matière alimentaire attirante pour le rongeur.

6. Un appât selon l'une quelconque des revendications précédentes, sous la forme d'un pellet ou d'un bloc.

7. Un appât selon l'une quelconque des revendications précédentes, dans lequel le nombre de particules fournissant du poison par rapport à la quantité de matière alimentaire est tel qu'il donne une particule pour chaque poids moyen de nourriture consommé par jour par un rongeur adulte moyen de l'espèce de rongeur contre laquelle l'appât est destiné à être utilisé.

8. Un appât pour rongeurs selon l'une quelconque des revendications précédentes, dans lequel la concentration de poison dans l'appât dans son ensemble ne dépasse pas 200 ppm.

9. Un procédé de préparation d'un appât tel que revendiqué dans l'une quelconque des revendications

14

1 à 8, selon lequel on combine les ingrédients pour les particules fournissant du poison avec un solvant liquide de façon à former une pâte; on extrude la pâte par un orifice; on coupe l'extrudat en particules; on sèche les particules; et on mélange les particules avec de la nourriture.

10. Un procédé selon la revendication 9, qui comprend l'étape supplémentaire consistant à comprimer l'appât en pellets ou en blocs.